# EUROPÄISCHE PATENTSCHRIFT

(11) **EP 1 279 631 B1**
(45) Veröffentlichungstag und Bekanntmachung des Hinweises auf die Patenterteilung: **22.02.2006**
(21) Anmeldenummer: 02016441.4
(22) Anmeldetag: 22.07.2002
(51) Int. Cl.: B65G 65/30, B65G 53/52, B65G 53/30, B01F 3/14

(54) **Verteilendes Aufgeben einer Schlammmasse auf bewegtes Mischmaterial**
Distribution of a slurry mass onto a moving composite material
Distribution de boues sur un matériau composite en movement

(30) Priorität: 23.07.2001 DE 10134964
(43) Veröffentlichungstag der Anmeldung: 29.01.2003
(73) Patentinhaber: Saxlund International GmbH, 29614 Soltau (DE)
(72) Erfinder: Groffmann, Christoph, 29646 Bispingen (DE); Wehner, Harald, 21271 Hanstedt (DE); Lange, Timo, 29328 Fassberg (DE)
(74) Vertreter: Leonhard, Frank Reimund

(56) Entgegenhaltungen:
- DE-A- 19 649 989
- US-A- 3 808 989
- US-A- 4 175 591
- US-A- 4 413 934

## Beschreibung

Die Erfindung betrifft ein Verfahren und eine Vorrichtung zum verteilenden Aufgeben einer pumpbaren Schlammmasse auf ein im Verhältnis trockenes (oder trockeneres) Mischmaterial, wie Müll, Biomasse oder Kohle, das bewegt einer Verwendungszone, wie einer Zwischenbearbeitung oder einem Verbrennungsbereich, zugeführt wird. Das bewegte Zuführen der pumpbaren Schlammmasse zu einer Verwendungszone umfaßt auch das Einbringen in einen Trichter oder Aufnahmebereich, bei dem das im Verhältnis trockenere Mischmaterial, beispielsweise Müll oder Kohle, eingeworfen wird und neben dem Einwerfen die pumpbare Schlammmasse in den Einwurfbereich des Trichters oder der Aufnahme zugeführt wird, um eine weitgehend gleichmäßige Verteilung zu erreichen.

Aus **US-A 3,808,989** (Welker) ist eine Verteilereinrichtung für Dickstoffe dem Fachmann zugänglich, wobei die Merkmale des Oberbegriffs des Anspruchs 1 dort umschrieben sind. Eine pumpbare Schlammmasse wird in einen mit vielen Öffnungen versehenen Einlass eingeführt, der am Boden des Verteilers angeordnet ist. Radial gerichtete Öffnungen (dort 40) sind vorgesehen, welche eine Verteilung der eingeführten Schlammmasse in radialer Richtung bewirken. Die Anordnung steht still, vgl. dort Spalte 1, Zeilen 4 bis 11. Der Schlamm wird dadurch einer Verwendungszone zugeführt. Alternativ ist aus der **US-A 4,413,934** (Kern) eine Rohreinrichtung bekannt, welche einen Strom von Kohlepartikeln in Flüssigkeit in eine Vielzahl von kleineren Strömen aufteilt. Das entspricht dem Gattungsbegriff des Anspruchs 8, im Sinne einer Aufgabeeinrichtung für ein förderbares Gut, das einer Verwendungszone zugeführt wird. Die dort beschriebene Masse ist eine Suspension aus Flüssigkeit und Feststoffen, die man nicht unbedingt als eine Schlammmasse bezeichnen kann, die aber durchaus förderbar oder pumpbar ist, und die in kleinere Ströme zerlegt wird. Das Förderrohr hat unterschiedliche Durchmesser, steht aber still, vgl. dort Spalte 2, Zeilen 45 bis 60. Andere Anwendungsgebiete über die dort beschriebene Kohle-Suspension (slurry of coal particles) hinaus werden angedeutet, aber nicht konkret beschrieben, vgl. dort Spalte 2, Zeile 63.

Es ist bekannt, daß bei der Müllverbrennung im Verbrennungsofen dem Müll in entsprechender Verteilung und anteilmäßig Schlamm zugeführt wird. Es kommt dabei darauf an, die Schlammmasse dem trockenen Mischmaterial in entsprechend gleichmäßiger Verteilung zuzuführen, damit die Anteile in der Verbrennungszone in einem entsprechenden günstigen Verhältnis zueinander stehen. Auch andere Verbrennungsanlagen können Anwendung finden.

Es ist Aufgabe der Erfindung eine Vorrichtung zum verteilenden Aufgeben einer pumpbaren Schlammmasse auf ein im Verhältnis trockeneres Mischmaterial vorzusehen, welches kontinuierlich einer Verwendungszone, wie einem Verarbeitungs- oder Verbrennungsbereich, zuführbar ist.

Diese Aufgabe wird durch ein Verfahren, bzw. eine Vorrichtung nach Anspruch 1, bzw 8 gelöst.

Ein Vorteil besteht darin, daß die Zuführung der Schlammmasse in einzelnen Strängen von begrenzter Länge eine gute Verteilung der Schlammmasse über die Ausdehnung des kontinuierlich bewegten oder schubweise eingefüllten Entsorgungsmaterials ermöglicht, indem die Zufuhr der Stränge in räumlicher Verteilung gegenüber der Fläche des trockenen Mischmaterials erfolgt.

Die pro Zeiteinheit ausgetragene Menge läßt sich bei vorbestimmtem Durchmesser der Schlammstränge durch Begrenzung ihrer Länge genau bestimmen.

Der Förderdruck steht im wesentlichen gleichmäßig an allen Strangaustrittsstellen an, so daß er nicht durch eine unveränderliche Querschnittsvorgabe eingestellt werden muß. Durch die Aufteilung auf zeitlich nacheinander ausgetragene Strangabschnitte profitiert jeder zeitlich anschließende Strang wieder von dem vollen Förderdruck des Vorrats (Anspruch 5). Die langfristige Volumenbilanz im Druckbehälter wird im ordnungsgemäß ablaufenden Betriebsfall gleichwohl erfüllt (Anspruch 4).

Ein weiterer Vorteil besteht darin, daß die Stränge an den verschiedenen Verteilungsstellen in vorbestimmter zeitlicher Verteilung ausgeteilt werden, was einen weiteren Verteilungseffekt zeitigt und die kontinuierliche Zuführung der zur Verteilung zu bringenden Schlammmasse durch Pumpen wesentlich vereinfacht.

Dadurch ergibt sich sowohl die zeitliche Verteilung (durch zyklisches Öffnen und Schließen der Verteilstellen), wie auch die räumliche Verteilung durch räumliches Beabstanden der Auslaßstellen aus dem den Vorrat aufnehmenden Rohr. Eine weitere räumliche Verteilung kann sich dadurch ergeben, daß das Rohr geschwenkt wird (Anspruch 3).

Die im wesentlichen kontinuierlich geförderte Schlammmasse als Dickstoff wird auf mehrere kleine Stränge aufgeteilt, um die zeitliche und räumliche Verteilung zu erreichen. Die aufgeteilten Stränge werden dabei bewegt, was zunächst eine Bewegung in Längsrichtung bedeutet, um die aufgeteilten Stränge auf die Verwendungszone aufzubringen. Zusätzlich kann eine Drehbewegung des Behälters, von dem die mehreren Stränge abgezweigt werden, hinzutreten, so daß die kleineren Stränge relativ zur Achse des Hauptstrangs verschwenken. Die Bewegung kann auch eine Richtungsänderung umfassen, bei die kleineren Stränge in einem im wesentlichen rechten Winkel aus der Achse des Hauptstrangs herausbewegt werden, um auf die Verwendungszone aufgetragen zu werden.

In dem Druckbehälter (Anspruch 8) wird ständig ein ausreichender Vorrat an Schlammmasse (Dickstoff) unter entsprechend erhöhtem Druck in Bereitschaft gehalten. Dieser Behälter ist mit mehreren in Abständen voneinander vorgesehenen Ausgabestellen in Form von Auslaßstutzen versehen, denen jeweils ein steuerbares Verschlußorgan zugeordnet ist.

Durch taktweises Ansteuern der verschiedenen Verschlußorgane lassen sich die Auslaßstutzen in zeitlicher Verteilung öffnen und schließen, so daß jeweils aus dem Druckbehälter an dem Auslaßstutzen, dessen Verschlußorgan vorübergehend geöffnet ist, ein Strang von begrenzter Länge ausgestoßen wird. Dieser verteilt sich auf dem bewegten Mischmateriaistrom entsprechend.

Die Auslaßstutzen sind in Abständen über den Druckbehälter verteilt, wodurch sich ein weiterer Verteilungseffekt ergibt. Durch Druck, Zahl der Auslaßstutzen und deren Durchmesser läßt sich pro Zeiteinheit ausgestoßene Menge an Schlammmasse genau genug bestimmen.

Ein noch zusätzlicher Verteilungseffekt ergibt sich, indem der Druckbehälter bewegbar ist, insbesondere um seine Längsachse gesteuert drehbar ist (Anspruch 8). Die ausgestoßene Schlammmasse enthält in dem Strang also nicht nur einen Bewegungsimpuls in Richtung der Strangachse, sondern ein zusätzliches Bewegungsmoment durch die Drehung des Druckbehälters.

Es sind dann zumindest zwei Bewegungskomponenten für die einzelnen Strangabschnitte überlagert, bevor sie auf das vorbeigeführte Entsorgungsgemisch auftreffen.

Weitere Ausgestaltungen der Erfindung finden sich in den abhängigen Ansprüchen 9 bis 28, die hier einbezogen sind.

Eine Drucküberwachung am Einlaß des Rohres sorgt für Sicherheit; es wird nicht mehr Dickstoff im Mittel zugeführt, als durch die im Querschnitt kleineren Stränge im Mittel austritt. Die Sicherheit ist konkret auch eine Sicherheitsabschaltung und eine Vorgabe des Sollwerts einer Vorlaufpumpe, die im Zuge des Druckleitungsabschnitts (Zufuhrleitung) liegt. Weitere Sicherheitsmaßnahmen können die Steuerung einer Gleitmitteldosierung über den Differenzdruck am Anfang und am Ende der Zufuhrleitung sein. Ebenso kann die Drucküberwachung dem Steuergerät zugeführt werden, um die Steuerung der Auslässe, hydraulisch oder pneumatisch, vorzunehmen.

Werden mehr als ein Strang gleichzeitig aus dem Druckrohr freigegeben, sollten sie dicht beieinander liegen.

Orientiert man den Druckbehälter als langgestrecktes Druckrohr mit einer Hauptachse, so kann diese Hauptachse relativ zur Förderrichtung des als Mischmaterial beschriebenen Entsorgungsgemisches im wesentlichen parallel oder im wesentlichen quer dazu ausgerichtet werden. Die beabstandeten Austässe definieren die Stutzen, die die kurzen Stränge aus Dickstoff abgeben, und sie sind in einer Richtung aufgereiht, wobei sie auch gegeneinander um die Hauptachse verdreht sein können oder alle gemeinsam aus der Vertikalebene verdreht sein können. Die Aufreihrichtung ist im allgemeinen die Hauptachse des Druckrohres.

Eine Verschwenkung des Druckrohres (Anspruch 8) kann mit seinen Grenzlagen so definiert sein, daß die kürzeren (örtlich und zeitlich verteilten) Schlammstränge maximal in den Randbereich des bewegten Entsorgungsgemisches gelangen.

Eine Variante mit der die Kontinuität und die Gleichmäßigkeit, mit welcher der in einem Rohr förderbare oder pumpbare Dickstoff verteilt ausgetragen wird, verbessert wird, ist die Verlegung der Druckmessung von einem Bereich vor dem Hauptrohr in den Bereich des Hauptrohres hinein, insbesondere in Hilfsstutzen, die einem jeweiligen Hauptstutzen im wesentlichen gegenüberliegen. Hier kann ein jeweiliger Druckschalter, auch für eine Gruppe von Hauptstutzen, vorgesehen sein, wobei er einen Aktivierungsdruck erfaßt oder darauf anspricht, der erreicht sein muß, bevor der zugehörige Hauptstutzen bei der zyklischen Steuerung der Verschlußorgane freigegeben wird. Es können mehrere Gruppen entlang des Hauptrohres vorgesehen sein, wobei auch für eine jeweilige Gruppe von mehreren Hauptstutzen ein Druckschalter in einem Hilfsstutzen vorgesehen ist.

Eine weitere Optimierung liegt in der Ausbildung einer Trenneinrichtung nahe einem freien Ende eines jeweiligen Hauptstutzens. Durch die Trenneinrichtung wird die als Abschnitt austretende Schlammmasse in kürzere Teilstränge gebrochen, verkürzt oder zerlegt (aufgespalten) oder in mehrere kürzere Abschnitte aufgeteilt, bevor diese auf das Mischmaterial auftreffen.

Ein hierfür bevorzugt vorgesehener (umlenkender) Krümmer hat einen bevorzugten Winkelbereich zwischen 45° und im wesentlichen 90°, um ein Brechen des austretenden Teilstrangs zu erreichen.

Das Einspeisen des Dickstoffes (Schlamms) in das Druckrohr mit den einzelnen verteilten Auslaßstutzen kann auch am Umfang (am Mantel) des Druckrohrs erfolgen, wobei die Achse der Einspeisung im wesentlichen senkrecht zu der Längsachse des Druckrohrs verläuft. Trotz der Quereinspeisung kann eine Verschwenkung, auch eine zyklische Verschwenkung ermöglicht werden.

Die Erfindung wird nachfolgend anhand schematischer Zeichnungen an Ausführungsbeispielen näher erläutert.

Es zeigen:
- **Figur 1**: die Aufgabevorrichtung als ein erstes Beispiel in einer Seitenansicht;
- **Figur 2**: die gleiche Vorrichtung in Aufsicht;
- **Figur 3**: Elemente der zugehörigen Steuerung;
- **Figur 4**: eine Stirnansicht mit abgenommenem Motor;
- **Figur 4a**: eine Ansicht des Endes eines Krümmers 2* mit einer Trenneinrichtung zum weiteren Zerlegen eines Teilstrangs;
- **Figur 5**: ist eine schematische Darstellung einer Förderstrecke mit einem Transportband 40, auf dem Mischmaterial M von rechts nach links in Richtung v gefördert wird;
- **Figur 5a**: ist eine erste Orientierung der Abgabe des Dickstoffes gegenüber einer Breite b einer Förderstrecke 41, auf dem das Mischmaterial M (senkrecht zur Papierebene im dargestellten Beispiel) gefördert wird;
- **Figur 5b**: ist eine alternative Orientierung des Abgebens des Dickstoffes, bei einer Förderung mit einer Förderstrecke 42 von rechts nach links, wobei eine Achse 100 des Druckbehälters 1 in Förderrichtung ausgerichtet ist;
- **Figur 5c**: ist eine alternative Verwendungszone in Form eines Zuführungstrichters, in welchen trockenes Mischgut von einem Greifer G eingefüllt wird und Dickstoff über eine Aufgabevorrichtung 1 auch ausgetragen wird;
- **Figur 6**: veranschaulicht eine Variante einer Aufgabevorrichtung mit nur drei dargestellten Rohrstutzen zur Abgabe von zeitlich und räumlich verteilten einzelnen Strängen der Schlammmasse;
- **Figur 6a**: ist eine Stirnansicht in Achsrichtung 100;
- **Figur 6b**: ist eine alternative Anordnung, ebenfalls in Stirnansicht in Richtung der Achse 100;
- **Figur 7**: veranschaulicht eine weitere Alternative einer Aufgabeeinrichtung;
- **Figur 7a**: veranschaulicht eine stimseitige Ansicht in Richtung der Achse 100 von Figur 7.

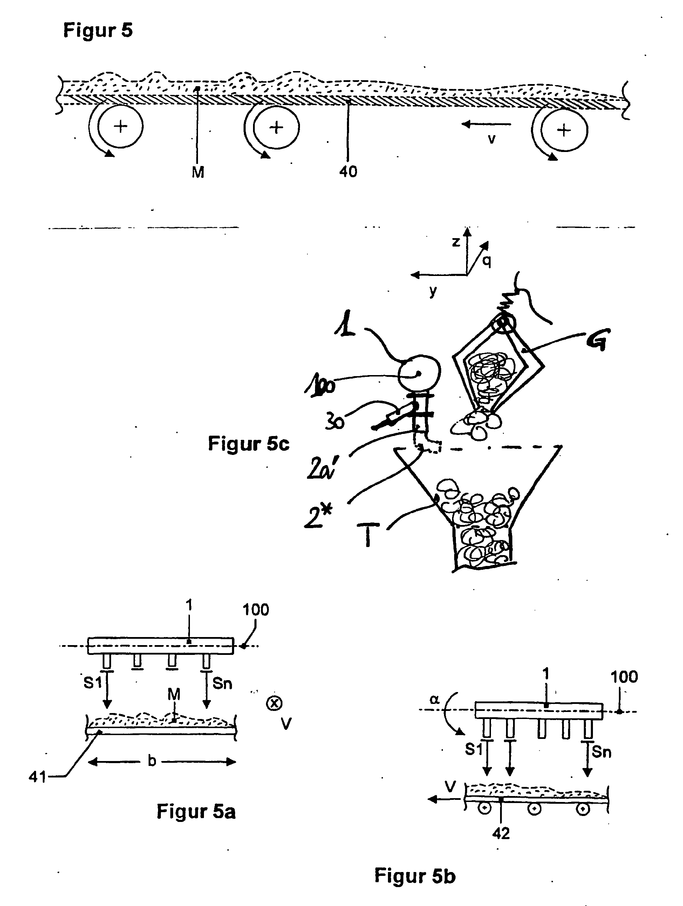

In dem Ausführungsbeispiel der Erfindung ist ein Druckbehälter in Form eines Druckrohres 1 mit Achse 100 vorgesehen, das eine den örtlichen Gegebenheiten und der Ausbildung der Zuführungseinrichtung für das trockene Mischgut, z.B. einen Zuführungstrichter T (nach **Figur 5c**) angepaßte Länge aufweist. Andere Möglichkeiten zur Beschickung des Mischmaterials, das ein trockenes, einer Verbrennung zugeführtes Mischmaterial aus mehreren gemischten Feststoffen sein kann, sind in den **Figuren 5, 5a** und **5b** gezeigt. Gegenüber der Achse 100 des Druckbehälters 1 wird auf einer Förderstrecke, die als Förderband 40,41,42 dargestellt ist, das Mischmaterial M gefördert, wobei die Förderrichtung mit v angegeben ist. Senkrecht dazu verläuft die Querrichtung q von Figur 5, die in Richtung der Achse 100 für eine der möglichen Anwendungen ausgerichtet ist.

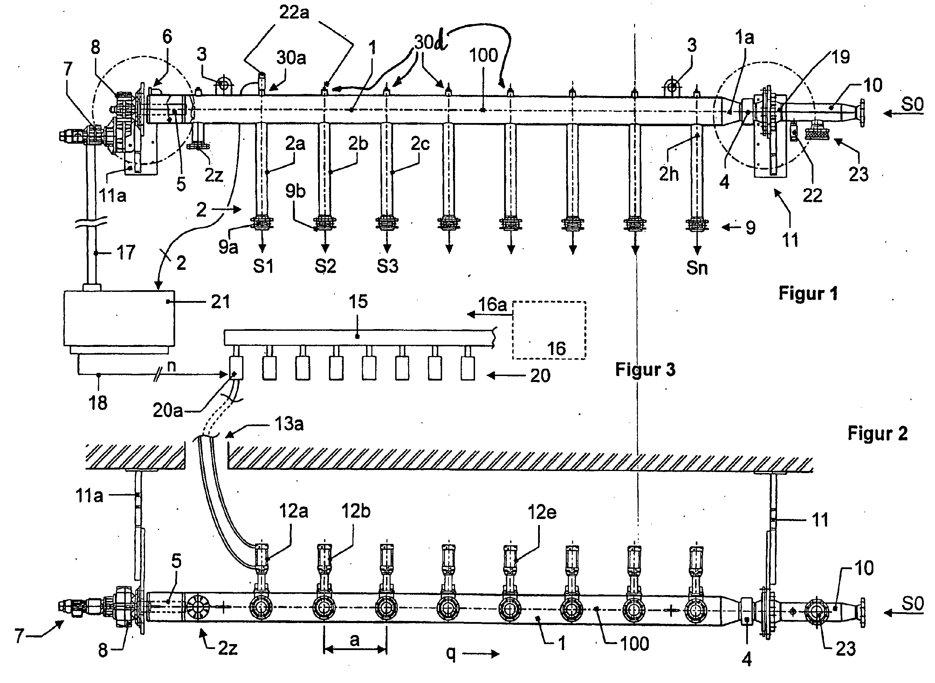

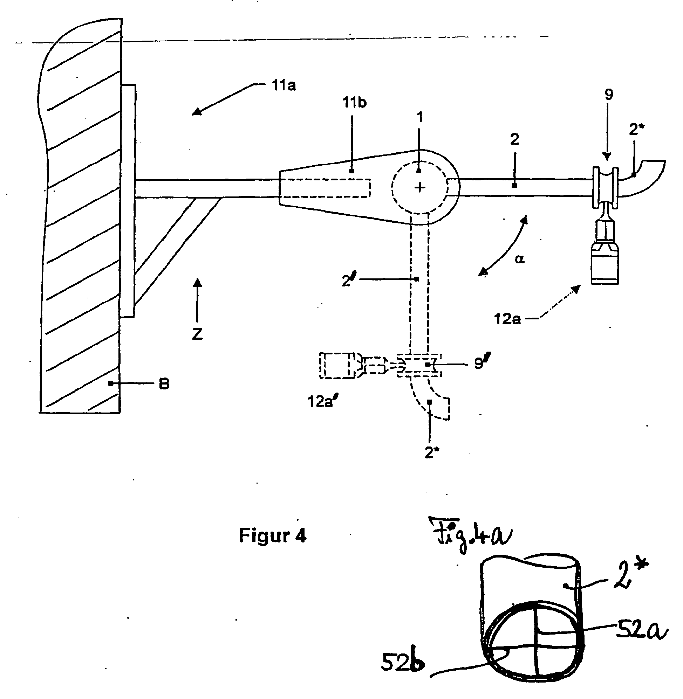

Insoweit kann die **Figur 4** mit der **Figur 5** korrespondierend betrachtet werden, wobei der Druckbehälter mit einer Schwenkbewegung gemäß Figur 4 später erläutert wird, aber unter dieser Schwenkbewegung α das Material M in einer Längsrichtung (von rechts nach links auf dem Blatt) bewegt wird, unter einer Gebäudewand B hindurch, an welcher der Druckbehälter in einer größeren Höhe z angeordnet ist, als das Band 40 sich bewegt.

Eine Variante zeigt **Figur 5b,** bei der die Achse 100 des Rohres 1 im wesentlichen parallel zu der Förderrichtung v ausgerichtet ist, weil die Querrichtung b in die Papierebene verlaufend eingezeichnet ist. Das Förderband 42, auf Förderwalzen liegend und angetrieben, wird von oben in Querrichtung schwenkend beaufschlagt.

Die beschriebene Variante ist in Figur 5b senkrecht zur Richtung v gesehen dargestellt, wobei die Breite b des dortigen Förderbandes 42 nicht ersichtlich ist. Die Förderrichtung v verläuft bei **Figur 5a** in die Papierebene hinein, bei einer quer dazu verlaufenden Achse 100 des Druckrohres 1 oberhalb des geförderten Materials.

Die Variante eines Aufnahme- oder Zuführungstrichters T mit einem beispielsweise durch Greifer zugeförderten Mischmaterial M, das auch mit einem Förderband gemäß Figur 5 zugefördert sein kann, veranschaulicht **Figur 5c.** Das stark bewegte Mischmaterial wird unterhalb des Trichters über einen Zuteiler einem Rost in einem Verbrennungsofen zugeführt. Die zu beschreibende Einrichtung ist schematisch mit 1 bezeichnet. Dieselbe Einrichtung war bei Figur 5a mit einer Achse 100 in Querrichtung des Bandes versehen, wobei sie nicht zu schwenken braucht, ist die Achse 100 in Bandrichtung orientiert, wie Figur 5b veranschaulicht, ist eine Schwenkung α des Hauptrohres 1 von Vorteil. Bei der Anordnung nach Figur 5c kann die eine oder andere Variante eingesetzt werden, also eine Schwenkung des Hauptrohres 1 um die Achse 100 und eine feste Orientierung bei keiner zyklischen Schwenkung.

Zunächst soll eine schwenkbare Variante des Druckrohres 1 beschrieben werden.

Das Druckrohr 1 kann mit Hilfe von Drehlagern an beiden Enden über Laschen 11 oder dergleichen Halter 11a an der Wand oder einer Decke B angeordnet werden, wie dies **Figur 2** zeigt. Ösen 3 dienen als Hilfselemente zum Aufhängen oder Transport des Druckrohres. Am linken Ende in **Figur 1** weist das Druckrohr 1 eine Welle 5 auf, die am Ende des Druckrohres vorspringt und zum Aufstecken eines Flachgetriebes 8 dient, mit dessen Hilfe das Druckrohr 1 um seine Längsachse durch einen Flanschmotor 7 angetrieben werden kann. Dem Motor 7 ist eine Bremse zugeordnet und seine Drehbewegung und Drehrichtung werden durch eine zentrale Steuereinrichtung 21 gesteuert, mit der der Motor über die Leitung 17 verbunden ist.

Etwa rechtwinklig von dem Mantel des Druckrohres 1 gehen Auslaßrohre oder Auslaßstutzen 2a, 2b bis 2h aus, die mit 2 bezeichnet sind und die bevorzugt entlang einer Mantellinie in vorbestimmten gegenseitigen Abständen a (in Richtung v) angeordnet sind. An dem Ende weist jedes Auslaßrohr 2 ein Verschlußorgan 9 auf, das in einer bevorzugten Ausführungsform als Verschlußschieber 9a, 9b, ... ausgebildet ist.

Die jedem Schieber 9 zugeordnete pneumatische Betätigungseinrichtung ist in Figur 2 allgemein mit 12 bezeichnet. Jede dieser Betätigungseinrichtungen 12a, 12b, 12c, ... bzw. 9a, 9b, ... 9h steht über entsprechende Steuerschläuche 13a und ein steuerbares Ventil 20a mit einem Druckluftverteiler 15 in Verbindung, der entsprechend dem Pfeil 16a mit einer Druckluftquelle 16 in Verbindung steht. Jedes der Ventile 20 ist über eine eigene Leitung 18 mit dem zentralen Steuergerät 21 verbunden. In der Figur 3 sind die Schlauchverbindungen 13a und die Steuerleitung 18 nur jeweils für eines der Elemente gezeigt. Es ist selbstverständlich, daß jedes der pneumatischen Betätigungselemente 12 über Schläuche mit einem entsprechenden Ventil 20n verbunden ist und daß jedes der Ventile 20n über eine Steuerleitung 18n mit dem Steuergerät 21 in Verbindung steht, n steht für n=1 ... n.

Die Betätigungseinrichtung 12 eines jeweiligen Schiebers 9 kann so ausgerichtet sein, wie bildlich in Figur 2 dargestellt, namentlich im wesentlichen senkrecht zur Orientierung des Hauptrohres 1; eine leichte Neigung von bis zu 45° von allen Betätigungseinrichtungen 12 kann eine kompaktere Ausbildung erreichen.

Am linken Ende des Druckbehälters 1 ist in Figur 2 ein Flachgetriebe 8 zu sehen.

Auf der anderen Seite des Druckrohres 1 ist eine druckdichte Drehverbindung 4 vorgesehen, über welche das drehbare Druckrohr 1 mit Anschlußkonus 1a mit einem Zuleiturigsstutzen 10 verbunden ist, an den die Zuführungsleitung für die pumpbare Schlammmasse so anflanschbar ist, die wiederum über eine nicht dargestellte Schlammpumpe mit einem Schlammvorrat in Verbindung steht.

Der Zuleitungsabschnitt 10 mündet über eine Muffe 19 an dem Flansch 11. Er trägt eine Drucksicherung 23 mit einer mechanischen Berstscheibe, die bei Überdruck eine seitliche Öffnung freigibt.

Zur Erhöhung der Sicherheit sind am dem Druckrohr 1 Drehbegrenzungsanschläge 6 vorgesehen, die mit festen Anschlägen im Bereich des zunächst gelegenen Lagers zusammenwirken, um einen maximal zulässigen Drehwinkelbereich α von < 180°nach Figur 4, vorzugsweise im Bereich von 90° festzulegen und zu sichern. Über den Motor 7 läßt sich der Druckbehälter gesteuert durch das Steuergerät 21 mit einstellbarer Drehgeschwindigkeit über diesen Winkelsektor oder einen entsprechend kleineren Winkelbereich in beiden Drehrichtungen und in vorbestimmtem Wechseltakt drehen.

Der Winkelsektor kann für die Anwendung nach Figur 5b so angepaßt sein, daß er als Grenzwinkel eine Bewegung des Druckrohres sperrt, um ein Aufgeben des Dickstoffes außerhalb der Förderbahn zu verhindern. Die abgegebenen Schlammstränge erreichen somit in ihrer einen oder anderen Endlage maximal den jeweiligen Randbereich des geförderten Mischmaterials, das in Richtung v bewegt wird. Die Bewegung verläuft zumeist im wesentlichen kontinuierlich. Sollte die Bewegung stoppen, kann eine Drehbewegung des Drehrohres 1 ebenfalls gestoppt werden. Diese beiden Bewegungen können synchronisiert werden.

Die in **Figur 5a** gezeigte Breite b des Bandes 41 entspricht der Breite des Förderbandes 42 (senkrecht zur Papierebene) von **Figur 5b.**

Eingangsseitig ist in dem Zuführungsstutzen 10 ein Druckmeßelement 22 angeordnet, das ebenfalls mit dem Steuergerät 21 verbunden werden kann, um die Steuerung in Abhängigkeit von dem Zuführungsdruck der Schlammmasse zu beeinflussen, insbesondere abzuschalten, wenn der Druck über einen Grenzwert steigt. Als weiteres Sicherungselement ist eingangsseitig das mechanisch arbeitende Berstelement 23 vorgesehen, welches bei Übersteigen eines maximal zulässigen Druckes in der Schlammmasse abgesprengt wird und damit das Rohr 1 entlastet. Diese Druckgrenze ist höher als der zuvor genannte Grenzwert.

Die im folgenden beschriebene Verteilung und Steuerung der Verschlußschieber 9 an den Hauptstutzen 2 kann gesperrt werden, wenn ein Druckschalter 22a, insbesondere ein Sensor, einen Mindestdruck als Aktivierungsdruck nicht signalisiert. Dieser erste Schwellenwert, der auch über einen Schalter als binäres Schaltsignal verfügbar sein kann, beeinflußt das Steuergerät 21 so, daß die der Erfassungseinrichtung 22a an einem Hilfsstutzen 30a zugeordnete Gruppe von Hauptstutzen 2a,2b,2c nicht zu öffnen vermag. Damit kann druckgesteuert gearbeitet werden, bei weiterer Vergleichmäßigung der abgegebenen Schlammstränge aus den unterschiedlichen Hauptstutzen 2. An einen anderen Hilfsstutzen 30d kann ein ebensolcher Sensor vorgesehen sein. Auch kann an jedem der gezeigten Hilfsstutzen, die entsprechend demjenigen 30d aufgebaut sind, ein Drucksensor 22a vorgesehen sein, um die Drucksteuerung für jeden Hauptstutzen vorzusehen. Eine Gruppe eines Hauptstutzens besteht dabei aus mindestens einem solchen Hauptstutzen. Auch der Sensor 22 am Eingang, der als ein Grenzdruck-Sensor zuvor beschrieben war, kann als ein Aktivierungsdruck-Sensor Einsatz finden, um einen Mindestdruck zu signalisieren, unterhalb dessen eine Freigabe keines der Schieber 9 und keiner der Betätigungseinrichtung 12 erfolgt, veranlaßt vom Steuergerät 21.

Über das Steuergerät 21 werden die verschiedenen Luftdrucksteuerventile 20 von dem zentralen Steuergerät 21 in vorbestimmter zeitlicher Folge angesteuert, so daß entsprechend die Verschlußschieber 9 der Ausstoßstutzen 2 über die Steuerglieder 12 in vorbestimmter zeitlicher Verteilung taktweise geöffnet werden.

Aufgrund der räumlichen Beabstandung der Stutzen ergibt die Betriebsweise im getakteten Aufgabebetrieb (jede Ausstoßstelle für ein vorgegebenes Zeitintervall) eine räumliche Verteilung der kleineren Schlammstränge S1, S2 bis Sn. Eine weitere räumliche Verteilung ergibt die vom Antrieb vorgegebene Bewegung der Ausstoßstelle am Druckrohr.

Der Druckbehälter 1 wird dabei um seine Längsachse in wechselnden Richtungen mit einstellbarer Geschwindigkeit gedreht oder anderweitig bewegt.

Der Druckbehälter 1 wird über der Zuführungsebene für das trockene Mischgut in entsprechend gewähltem Abstand und quer zur Transportrichtung über dem Zuführungsflächenbereich angeordnet. Entsprechend dieser Flächenausdehnung und der Menge an zeitlich bewegtem trockenem Mischgut kann die Zahl der Auslaßstutzen 2 und ihrer Abstände und die Länge des Druckbehälters 1 entsprechend gewählt werden.

Im Betrieb wird im vorbestimmten Abstand oberhalb der Ebene, entlang der das trockene Mischgut zugeführt wird, in dem Druckbehälter ständig ein ausreichender Schlammvorrat unter erhöhtem Druck bereitgehalten. Hierzu steht der Druckbehälter 1 in ständig offener Verbindung mit einem Förderstrom S0. Aus diesem Schlammvorrat in dem Druckbehälter werden an mehreren Ausgabestellen, die in vorbestimmter Verteilung an dem Druckbehälter vorgesehen sind, einzelne Stränge durch ihre Ausstoßgeschwindigkeit bewegt und auf das bewegte trockene Mischgut ausgestoßen.

Die Ausbringung erfolgt in Schlammsträngen von begrenzter Länge und durch die Auslaßstutzen 2 mit vorbestimmtem Durchmesser. Die Stränge werden jedoch nicht alle gleichzeitig ausgestoßen, sondern in vorbestimmter zeitlicher Verteilung und damit auch in entsprechender räumlicher Verteilung. Neben der zuvor beschriebenen Verteilung kann auch jeder einzelne ausgetragene Schlammstrang nochmals in sich aufgetrennt werden, was eine vorteilhafte Ergänzung ist. Erfahrungen haben gezeigt, daß die austretenden Schlammstränge nicht zu lang sein sollten, also unter 150 mm Länge, bevorzugt im Bereich von 100 bis 150 mm. Während des Austrags eines Schlammstrangs kann dieser in sich selbst verkürzt werden, indem er gebrochen, zerlegt oder in mehrere kurze Abschnitte mit beabstandeten Rissen gebracht wird, was durch eine mechanische Umlenkung an einem jeweiligen Austritt eines Auslaßstutzens geschehen kann.

Eine Möglichkeit der Umlenkung zeigt die Figur 4 schematisch mit 2*. Hier ist ein 90°-Krümmer gezeigt, der als Rohrabschnitt für eine Umlenkung des Schlammstrangs sorgt. Bei der Umlenkung erhält der Schlammstrang innere Risse oder reißt gänzlich in viele kleinere Teile auf, die einzelne Abschnitte sind, was durch die Konsistenz, insbesondere die relative Zähflüssigkeit bis hin zur Dickflüssigkeit begründet ist. Der Bogen sollte eine Krümmung von bis zu 90° haben, kann aber auch bis zum 45° reduziert werden.

Eine weitere Möglichkeit des Auftrennens der ausgetragenen einzelnen Schlammstränge veranschaulicht die Figur 4a. Hier wird durch eine schneidende Trennung eine Aufteilung in Längsrichtung des austretenden Strangs erhalten. Diese kann zusätzlich zu der Krümmereinrichtung 2* vorgesehen sein, sie kann aber auch an einem nicht gekrümmten Ende des Auslaßstutzens vorgesehen werden. Beispielsweise wirken zwei kreuzweise gespannte Drähte 52a,52b schneidend und damit trennend auf den Schlammstrang. Weitere Möglichkeiten sind messerartige Keile oder Trenneinrichtungen, die ein Aufspalten bewirken. Die so wirksame passive Zerlegung ergibt mehrere Teilstränge des schon in seinem Durchmesser reduzierten auszuwerfenden Teilstrangs aus dem Druckbehälter 1.

Wenn sich die Auslaßöffnungen der Auslaßstutzen 2 gleichzeitig beim Öffnen des zugehörigen Schiebers in Schwenkbewegung befinden, ergibt sich eine sehr einfache, zuverlässige und gleichmäßige Verteilung der Schlammmasse über den Zuführungsbereich des trockenen Mischgutes.

Das Verteilungsmuster der einzelnen Stränge läßt sich durch die Dauer des Öffnens der Schieber und durch die Drehgeschwindigkeit des Druckbehälters um seine Achse an die jeweiligen Verhältnisse leicht anpassen.

Am linken Endbereich ist ein kürzerer Blindstutzen 2z vorgesehen, der als Reserveaustrag dient, um einen Auslaßstutzen mit einer festen Länge an verschiedene Breiten eines Trichters oder einer Förderbahn anzupassen. Der zunächst verschlossene Rohrstutzen (als Blindstutzen) wird dabei geöffnet und mit einem steuerbaren Verschlußorgan 9 versehen, wie es auch die anderen Rohrstutzen 2 aufweisen. Dieser zusätzliche Rohrstutzen wird mit seinem Verschlußorgan in die Steuerung der anderen Verschlußorgane einbezogen, um eine größere Breite mit Schlammstoff beschicken zu können.

Die Grenzlagen 0° und 90° sind in Figur 4 in Seitenansicht verdeutlicht; die gestrichenen Elemente entsprechen den Elementen aus der 0°-Lage in der 90°-Lage. Der Halter 11 hat ein langovales Beschlagteil 11b, das an den rohrförmigen Querschnitt des Druckbehälters an einem Ende angepaßt ist.

Jedem Auslaß 2a, 2b, ... ist ein jeweiliger kleinerer Stutzen 30a,30d zugeordnet, der im Betrieb verschlossen ist, aber für Wartungszwecke geöffnet werden kann. Jeder der Wartungsstutzen kann geöffnet werden, um mit Stocherarbeiten oder Spülungen die Hauptstutzen 2a,2b,2c (allgemein mit 2 bezeichnet) bei einer Blockierung freizubekommen.

Eine zusätzliche Optimierung ergibt sich dann, wenn einer oder mehrere der Stutzen auch im Betrieb geöffnet sind, aber mit einem Druckschalter versehen sind. Der hier installierte Druckschalter 22a kann den Druck in einem Bereich nahe einem Haupt-Auslaßstutzen messen, um eine Drucksteuerung möglichst weit in das Drehrohr hineinzuverlegen und eine genauere Druckmessung zu erhalten, als sie mit dem Druckmeßelement 22 eingangsseitig im Zuführstutzen 10 alleine möglich ist. Werden mehrere verteilte Druckschalter 22a an den kleinen Hilfsstutzen 30d vorgesehen, kann jeweils einer für eine Gruppe von Hauptstutzen Verwendung finden, so beispielsweise ein Druckschalter am Hilfsstutzen 30a für die Hauptstutzen 2a,2b,2c. Je mehr Druckschalter an Hilfsstutzen verwendet werden, desto kleiner werden die Gruppen, bis hin zu einem Schalter pro Stutzen. Je mehr Meßeinrichtungen als Druckschalter vorliegen, desto genauer wird die Messung des Drucks. Um zu viele Druckschalter zu vermeiden, können bevorzugt zwei oder drei Druckschalter Verwendung finden, bei zwischen 8 bis 9 Hauptstutzen, also jeweils 3 bis 4 Hauptstutzen einer Gruppe zugewiesen werden, oder das Hauptrohr nur 3 bis 4 Hauptstutzen besitzen.

Die einzelnen Druckschalter 22a im Bereich des Hauptrohres 1 veranlassen die Steuerung 21 dazu, die zugehörige Gruppe von Hauptstutzen erst dann für eine zyklische Öffnung überhaupt freizugeben, wenn ein Mindestdruck erreicht ist. Das Meßsignal des Druckschalters wird mit einer Und-Verknüpfung mit den Schaltsignalen für die Steuerung 20 verknüpft.

Durch diese Optimierung kann sichergestellt werden, daß noch genauere Schlammstränge hinsichtlich ihrer Länge abgegeben werden, unabhängig von dem räumlichen Ort, von dem sie ausgetragen werden, also durch welchen der Hauptstutzen sie austreten. Eine Schieflage der Verteilung, z.B. dadurch, daß ein Stutzen nahe dem Zuführstutzen eine zu hohe Menge in einem fest vorgegebenen Zeitintervall abgibt, kann vermieden werden.

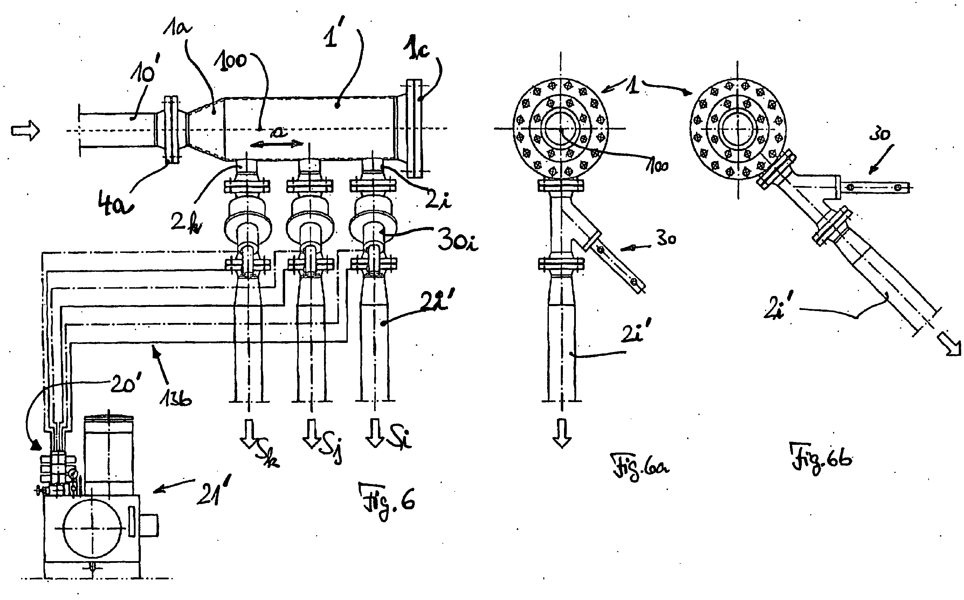

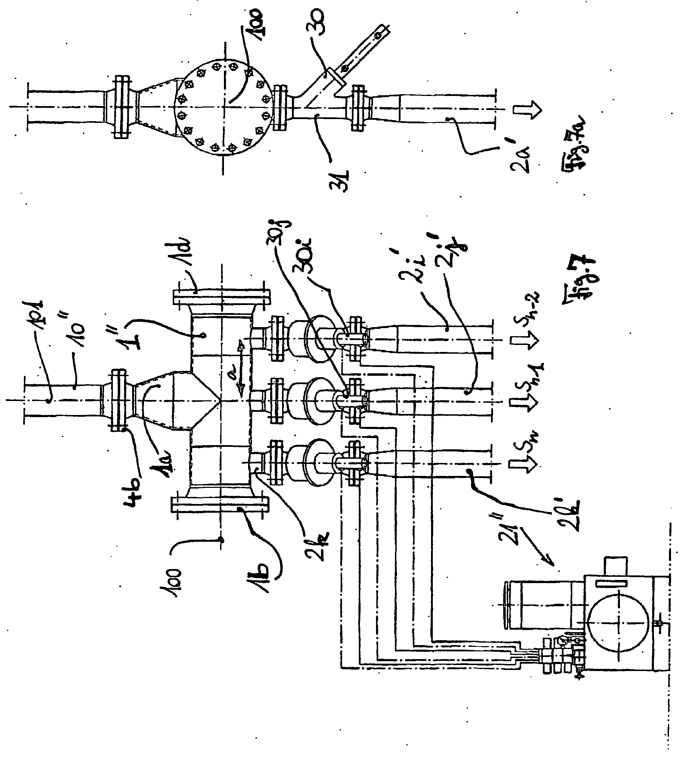

Eine weitere Ausführungsform zeigt die **Figur 6** und eine noch weitere Ausführungsform zeigt die **Figur 7.** Auch hier wird von einem Hauptrohr ausgegangen, bei dem eine räumliche Beabstandung von Stutzen vorgesehen ist, die bei einer Betriebsweise im getakteten Aufgabebetrieb (jede Austragstelle für ein vorgegebenes Zeitintervall) eine räumliche Verteilung der kleineren Schlammstränge erreichen. Bei der Figur 6 sind nur drei Schlammstränge Si,Sj und Sk vorgesehen. Auch hier ist ein Zuleitungsabschnitt 10' vorgesehen, der über einen Montageflansch 4a und einen Konus 1a in das Druckrohr 1' überleitet. Dieses Druckrohr ist am Ende mit einem Deckel 1c verschlossen und an seinem unteren Ende ragen drei Hauptstutzen 2i,2j,2k heraus, die in einem Zwischenabschnitt mit Ventilen 30 versehen sind (30i,30j und 30k), vor einem jeweiligen weiteren Rohrabschnitt 2i',2j',2k'. Am unteren Ende, beim Austritt der einzelnen Stränge, können diejenigen Zerteileinrichtungen vorgesehen sein, die im Zuge der Figur 4a oder auch mit einem Krümmer 2* von Figur 4 beschrieben wurden.

Der Durchmesser des Hauptrohres ist wesentlich größer als derjenige der Stutzen.

Die Steuerung wird von einer Hydrauliksteuerung 21' erreicht, wobei Wegeventile 20' über Hydraulikleitungen 13b die einzelnen Verschließorgane 30 ansteuern und zyklisch öffnen und schließen. Die Ventile sind als Schrägsitzventile ausgebildet, was aus **Figur 6a und 6b** entnommen werden kann. Diese beiden Darstellungen zeigen auch eine im Winkel veränderte Orientierung der Austrittsstelle, welche am Montageflansch 4a vorgenommen werden kann. Durch die Schraubstellen ist es möglich, eine angepaßte Veränderung der Richtung des Austrages zu wählen und diese aus der vertikalen Ebene verschwenkte Richtung fest zu montieren, aber veränderbar zu gestalten.

Der Abstand der austretenden Hauptstutzen ist mit a bezeichnet und die Austrittsstutzen sind recht eng beieinander angeordnet. Eine Erweiterung der Vorrichtung ist möglich, wenn in Modulbauweise ein ähnliches Rohrstück nach Entfernen des Deckels 1c angeflanscht wird, beispielsweise spiegelsymmetrisch, oder ein solches Rohrstück ohne einen Konus 1a. Auch eine weitergehende Verlängerung ist möglich, wenn breitere Bahnen oder Trichter beschickt werden sollen. Die Steuerung erfolgt so, wie zuvor beschrieben, nur hier über ein Hydraulikaggregat 21' und Schrägsitzventile 30, nicht über pneumatisch gesteuerte Verschlußschieber. Vom Wesen her sind aber auch die hydraulisch gesteuerten Schrägsitzventile "Verschlußorgane", die über eine Steuerungseinrichtung zyklisch geöffnet und geschlossen werden können, um den Hauptstrang in einzelne kleinere Stränge zeitlich und räumlich aufzuteilen.

Durch ein Verändern der Winkellage aus der Vertikalebene gemäß Figur 6b kann die Wurfparabel (am Austrittsende der Stutzen) eingestellt werden und an den Auftreffort ebenso angepaßt werden, wie an die Konsistenz des zu fördernden Dickstoffs aus der Rohrleitung 10'. Beispielsweise ist es gemäß Figur 5c möglich, bei einer Schrägeinstellung der Wurfparabel mit dem Hauptrohr 1 nahe an den seitlichen Rand des Trichters T zu gelangen und den gesamten Einwurfbereich des Trichters für einen Greifer G freizuhalten, der das Mischmaterial zufördert. Bei dem stark bewegten Mischmaterial ergibt sich ein schichtweises Austragen mit gut verteiltem Dickstoff im Einwurftrichter T.

Im Zuge der Zuführleitung 10' können dieselben Einrichtungen 22,23 vorgesehen sein, wie sie in Figur 1 erläutert waren.

Figur 7 ist unmittelbar mit Figur 6 vergleichbar, nur ist hier ein Hauptrohr 1", das von einer Querrichtung aus mit dem Zuführungsstutzen 10" verbunden ist, und zwar über einen Flansch 4b. Der Konus 1a läuft hier im wesentlichen senkrecht zur Hauptachse 100, orientiert in einer Nebenachse 101, in der das Zufuhrrohr 10" angeordnet ist. Linksseitig und rechtsseitig des Hauptstutzens 1" ist jeweils ein Verschlußdeckel 1b, 1d vorgesehen.

Die Steuerung und die Anordnung der Auslaßstutzen 2j, 2i und 2k ist ebenso, wie zuvor bei Figur 6 beschrieben.

Eine Verschwenkung gemäß Figur 6b ist nicht ohne weiteres möglich, wie Figur 7a zeigt. Wird allerdings der Zufuhrstutzen 10" mit einem elastischen Schlauch ausgeführt, kann auch eine solche Verschwenkung erfolgen, ohne eine mechanische Montage, vielmehr lediglich durch Verlagern des Rohres 1 um seine Hauptachse 100. Eine Zufuhr des Dickstoffes gemäß Figur 7 ist auch bei Figur 1 möglich, wenn ein elastischer Zufuhrschlauch vorgesehen ist, der die zyklische Verschwenkung des Rohres dauerhaft zuläßt.

Zur Betriebsweise und zur Ansteuerung der Ventile bei Figur 7 wird hinsichtlich der hydraulischen Ansteuerung auf die Figur 6 verwiesen. Wird eine pneumatische Ansteuerung 21 vorgesehen, wird auf die Figur 3 und die zugehörigen Beschreibungsteile verwiesen. Das Hydraulikaggregat 21" entspricht demjenigen 21' von Figur 6 und im Zuge der Zufuhrleitung 10" können dieselben Einrichtungen 22,23 vorgesehen sein, wie Figur 1 zeigt.

Im Zuge des Auslasses am Ende der Hauptstutzen 2i',2j',2k' können die Trenneinrichtungen von Figur 4a oder Figur 4 vorgesehen sein, auch in Kombination, um eine Zerteilung, in Quer- oder Längsrichtung, der Teilstränge am Austragsort zu erreichen.

## Patentansprüche

1. Verfahren zum Aufgeben einer förder- oder pumpbaren Schlammmasse (S0) auf ein im Verhältnis dazu trockeneres Mischmaterial (M), welches einer Verwendungszone, wie einem Trichter-, Zwischenbearbeitungs- oder Verbrennungsbereich, zugeführt wird,
**dadurch gekennzeichnet, dass**
die geförderte oder gepumpte Schlammmasse in einzelne Stränge (S1, S2, ... Sn) von begrenzter Länge aufgeteilt (9,2) und zeitlich und räumlich verteilt auf das der Zone zugeführte Mischmaterial (M) aufgebracht wird.

2. Verfahren nach Anspruch 1, wobei ständig ein gemeinsamer Schlammvorrat (S0) oberhalb (z) einer Bahn des Mischgutes unter erhöhtem Druck bereit gehalten wird, und aus diesem Vorrat an jeweils wechselnden Stellen die Schlammstränge als Abschnitte unter dem Druck des Schlammvorrates ausgestoßen werden.

3. Verfahren nach Anspruch 1, wobei der Schlammvorrat (S0) in zylindrischer Form in einem Rohr (1) und mit seiner Längsachse (100), insbesondere quer über einer Bahn des Mischmaterials (M), bereitgehalten und zusammen mit Ausstoßstellen (9,2) für die Schlammstränge nach einem sich periodisch wiederholenden Muster um seine Lächsachse geschwenkt wird (α).

4. Verfahren nach Anspruch 1, wobei die Schlammmasse mit einem ersten Volumen pro Zeiteinheit zugefördert wird und die Summe der Volumen der räumlich verteilt abgegebenen Schlammstränge in derselben Zeiteinheit im wesentlichen dem ersten Volumen entspricht.

5. Verfahren nach Anspruch 1, wobei die Schlammmasse mit einem Eintrittsquerschnitt im wesentlichen kontinuierlich zugefördert wird (S0), aber in mehrere zeitlich nacheinander austretende Schlamm-Strangabschnitte (S1,S2,...,Sn) aufgeteilt wird, die einen geringeren Querschnitt aufweisen, als der Eintrittsquerschnitt.

6. Verfahren nach Anspruch 2, wobei der erhöhte Druck ein Druckwert oberhalb des Umgebungsdrucks ist, insbesondere oberhalb 1 bar (100 kPa).

7. Verfahren nach Anspruch 1, wobei das trockenere Mischmaterial (M) im wesentlichen kontinuierlich (v, 40) der Verwendungszone zugeführt wird.

8. Aufgabevorrichtung zum verteilenden Aufgeben einer förder- oder pumpbaren Schlammmasse auf ein im Verhältnis dazu trockeneres Mischgut, welches einer Verwendungszone, wie einem Verbrennungsbereich, zuführbar ist, **gekennzeichnet durch**
(i) einen an seinen beiden Enden gelagerten (11a,11) langgestreckten Druckbehälter (1) mit mehreren von seinem Umfang ausgehenden, in Abständen voneinander angeordneten Auslaßstutzen (2;2a,2b), die jeweils ein steuerbares Verschlußorgan (9,12) aufweisen;
(ii) einen Antrieb (7) zum zyklischen Bewegen (α) des Druckbehälters (1);
(iii) eine Gelenkstelle (4) zum Verbinden des Druckbehälters (1) mit einem Druckleitungsabschnitt (10) und zum Zuführen der Schlammmasse zu dem Druckbehälter (1) während seiner Bewegung (α).

9. Aufgabevorrichtung nach Anspruch 8, wobei ein Sektorwinkel (α), über den der Druckbehälter (1) drehbar ist, begrenzt ist und der Druckbehälter im Wechsel in beiden Richtungen antreibbar ist, um den Sektor in die eine bzw. in die entgegengesetzte Richtung zu durchlaufen.

10. Aufgabevorrichtung nach Anspruch 8, wobei die Verschlußorgane (9,30) in Endbereichen der Auslaßstutzen angeordnet sind.

11. Aufgabevorrichtung nach Anspruch 10, wobei die Verschlußorgane als steuerbare Absperrschieber ausgebildet sind, wobei alle Steuerschieber an ein gemeinsames Steuergerät (21;20,13,21',21") angeschlossen sind.

12. Aufgabevorrichtung nach Anspruch 8, wobei ein Verschlußorgan (9a,30) jeweils im Zuge eines zugehörigen Auslaßrohres (2a,2k) angeordnet sind.

13. Aufgabevorrichtung nach Anspruch 12, wobei ein jeweiliges Verschlußorgan als pneumatisch steuerbarer (12a) Absperrschieber ausgebildet ist, der über Luftdruckschläuche und Ventile (13,20) an eine Luftdruckquelle angeschlossen ist.

14. Aufgabevorrichtung nach Anspruch 13, wobei die Ventile (20) und der Antrieb (7) mit einem Taktsteuergerät (21) verbunden sind.

15. Aufgabevorrichtung nach Anspruch 8, wobei die Stutzen (2a,2b,2h) Rohrstücke aufweisen, deren Durchmesser geringer ist als derjenige des Druckbehälters (1).

16. Aufgabevorrichtung nach Anspruch 8, wobei Auslaßrohre (2) in gegenseitigen Abständen (a) entlang einer Mantellinie des Druckbehälters (1) angeordnet sind und im wesentlichen rechtwinklig von einer Längsachse (100) des Druckbehälters ausgehen.

17. Aufgabevorrichtung nach Anspruch 9, wobei eine Einhaltung des Sektorwinkels (α) mit mechanischen Grenzanschlägen (6) überwacht ist.

18. Aufgabevorrichtung nach Anspruch 9, wobei der Sektorwinkel (α) über elektrisch erfaßte Grenzlagen der zyklisch wiederkehrenden Schwenkbewegung des Druckbehälters im Sektor eingehalten wird bzw. überwachbar ist.

19. Aufgabevorrichtung nach Anspruch 8, wobei zwischen Gelenkstelle (4) und dem ersten Stutzen (2h) am Druckbehälter (1) ein sich konisch erweiternder Abschnitt (1a) angeordnet ist, um ein größeres Vorratsvolumen im Druckbehälter zu erhalten.

20. Aufgabevorrichtung nach Anspruch 8, wobei die Abstände (a) jeweils zweier benachbarter Stutzen (2a,2b, ... 2h) im wesentlichen gleich sind.

21. Aufgabevorrichtung nach Anspruch 8, wobei ein zunächst verschlossener Rohrstutzen (2z) in einem dem Zufuhr-Druckleitungsabschnitt (10) abgewandten Endbereich des Druckbehälters (1) angeordnet ist,
um für eine größere Breite (b) des geförderten Mischmaterials angepaßt geöffnet zu werden, mit einem eigenen steuerbaren Verschlußorgan versehen zu werden und in die Steuerung der anderen Verschlußorgane (9) einbezogen zu werden.

22. Aufgabevorrichtung nach Anspruch 11 oder 8, wobei das bzw. ein Taktsteuergerät (21,21',21") die steuerbaren Verschlußorgane (9,12,30i,30j) so ansteuert, daß beim oder nach einem Schließen eines ersten Organs (9a) ein weiteres Organ (9b) öffnet bzw. veranlaßt wird zu öffnen.

23. Aufgabevorrichtung nach Anspruch 8, wobei am Druckbehälter, jeweils gegenüber einem Auslaßstutzen (2a,2b), ein Hilfsstutzen (30d) angeordnet ist, der geöffnet werden kann, um einen Durchgang des Auslaßstutzens und des steuerbaren Verschlußorgans (9,12) durch Reinigen herzustellen.

24. Aufgabevorrichtung nach Anspruch 8, wobei der Antrieb (7) als auf eine stimseitige Welle des Druckbehälters (1) anflanschbarer elektrischer Aufsteckmotor ausgebildet ist.

25. Aufgabevorrichtung nach Anspruch 24, wobei der Antrieb mit seinem Stator an einen nicht mit dem Druckbehälter (1) mitbewegten Verbindungsflansch (11a) gekoppelt ist.

26. Aufgabevorrichtung nach Anspruch 8, wobei eine Druckmeßeinrichtung (22) nahe dem Druckbehälter, insbesondere im Zufuhr-Druckleitungsabschnitt (10) angeordnet ist, zum Messen des Innendrucks.

27. Aufgabevorrichtung nach Anspruch 26, wobei ein mechanischer Berstschutz (23) nahe dem Drucksensor (22) angeordnet ist, zum Begrenzen des Innendrucks auf einen maximalen Grenzwert.

28. Aufgabevorrichtung nach Anspruch 8, wobei der Druckbehälter (1) rohrförmig zylindrisch ausgebildet ist.

## Claims

1. Process for delivering a conveyable or pumpable slurry composition (S0) onto a comparatively drier mixed material (M), which is supplied to a use zone, such as a funnel, intermediate processing or combustion region, **characterised in that** the conveyed or pumped slurry composition is divided (9, 2) into individual strands (S1, S2, ... Sn) of defined length and applied in temporally and spatially distributed manner onto the mixed material (M) supplied to the zone.

2. Process according to claim 1, wherein a common slurry store (S0) is constantly kept ready under elevated pressure above (z) a path of the mixed material, and the slurry strands as sections under the pressure of the slurry store are discharged from this store at in each case alternating points.

3. Process according to claim 1, wherein the slurry store (S0) is kept ready in cylindrical form in a pipe (1) and with its longitudinal axis (100), in particular transversely above a path of the mixed material (M) and together with discharge points (9, 2) for the slurry strands is pivoted (α) about its longitudinal axis according to a periodically repeating pattern.

4. Process according to claim 1, wherein the slurry composition is conveyed at a first volume per unit of time and the sum of the volumes of the slurry strands released in spatially distributed manner in the same unit of time corresponds essentially to the first volume.

5. Process according to claim 1, wherein the slurry composition having an entrance cross-section is conveyed (S0) essentially continuously, but is divided into several slurry strand sections (S1, S2, ... Sn) emerging temporally one after another, and which have a smaller cross-section than the entrance cross-section.

6. Process according to claim 2, wherein the elevated pressure is a pressure value above the ambient pressure, in particular above 1 bar (100 kPa).

7. Process according to claim 1, wherein the drier mixed material (M) is supplied essentially continuously (v, 40) to the use zone.

8. Delivery device for distributing delivery of a conveyable or pumpable slurry composition onto a comparatively drier mixed material, which can be supplied to a use zone, such as a combustion zone, **characterised by**
(i) an elongated pressurised container (1) mounted (11a, 11) at its two ends and having several outlet connections (2; 2a, 2b) arranged starting from its periphery at intervals from one another, and which have in each case a controllable closure element (9, 12);
(ii) a drive (7) for cyclic movement (α) of the pressurised container (1);
(iii) a link point (4) for connecting the pressurised container (1) to a pressure conduit section (10) and for supplying the slurry composition to the pressurised container (1) during its movement (α).

9. Delivery device according to claim 8, wherein a sector angle (α), through which the pressurised container (1) can be rotated, is defined and the pressurised container can be driven alternately in both directions in order to pass through the sector into the one or into the opposite direction.

10. Delivery device according to claim 8, wherein the closure elements (9, 30) are arranged in end regions of the outlet connections.

11. Delivery device according to claim 10, wherein the closure elements are designed as controllable stop valves, wherein all control valves are connected to a common control apparatus (21; 20, 13, 21', 21").

12. Delivery device according to claim 8, wherein a closure element (9a, 30) are arranged in each case in the path of an associated outlet pipe (2a, 2k).

13. Delivery device according to claim 12, wherein a particular closure element is designed as a pneumatically controllable (12a) stop valve, which is connected to a compressed air source via compressed air tubes and valves (13, 20).

14. Delivery device according to claim 13, wherein the valves (20) and the drive (7) are connected to a cycle control apparatus (21).

15. Delivery device according to claim 8, wherein the connections (2a, 2b, 2h) have pipe pieces, the diameter of which is lower than that of the pressurised container (1).

16. Delivery device according to claim 8, wherein outlet pipes (2) are arranged at mutual intervals (a) along a shell line of the pressurised container (1) and start essentially at a right angle from a longitudinal axis (100) of the pressurised container.

17. Delivery device according to claim 9, wherein adherence to the sector angle (α) is monitored using mechanical limiting stops (6).

18. Delivery device according to claim 9, wherein the sector angle (α) is adhered to or can be monitored via electrically recorded limiting positions of the cyclically recurring pivoting movement of the pressurised container in the sector.

19. Delivery device according to claim 8, wherein a conically expanding section (1a) is arranged between link point (4) and the first connection (2h) on the pressurised container (1) in order to obtain a greater store volume in the pressurised container.

20. Delivery device according to claim 8, wherein the intervals (a) of in each case two adjacent connections (2a, 2b, ... 2h) are essentially the same.

21. Delivery device according to claim 8, wherein an initially closed pipe connection (2z) is arranged in an end region of the pressurised container (1) facing away from the supply pressure conduit section (10), in order to be opened adapted for a greater width (b) of the conveyed mixed material, to be provided with a suitable controllable closure element and to be included in the control of the other closure elements (9).

22. Delivery device according to claim 11 or 8, wherein the or a cycle control apparatus (21, 21', 21") controls the controllable closure elements (9, 12, 30i, 30j) so that during or after closure of a first element (9a), a further element (9b) opens or is induced to open.

23. Delivery device according to claim 8, wherein an auxiliary connection (30d), which may be opened, is arranged on the pressurised container, in each case opposite an outlet connection (2a, 2b), in order to produce a passage of the outlet connection and of the controllable closure element (9, 12) by cleaning.

24. Delivery device according to claim 8, wherein the drive (7) is designed as electrical slip-on motor which can be flanged onto an end face-side shaft of the pressurised container (1).

25. Delivery device according to claim 24, wherein the drive is coupled to a stator on a connecting flange (11a) not moved with the pressurised container (1).

26. Delivery device according to claim 8, wherein a pressure-measuring device (22) is arranged close to the pressurised container, in particular in the supply pressure conduit section (10), to measure the internal pressure.

27. Delivery device according to claim 26, wherein mechanical bursting protection (23) is arranged close to the pressure sensor (22) to limit the internal pressure to a maximum limiting value.

28. Delivery device according to claim 8, wherein the pressurised container (1) is designed to be tubular and cylindrical.

## Revendications

1. Procédé de chargement (distribution) d'une masse de boue (S0) pouvant être transportée ou pompée sur un matériau mixte (M) comparativement plus sec, lequel est amené à une zone d'utilisation, comme une zone à trémie, de traitement intermédiaire ou d'incinération,
**caractérisé en ce que**
la masse de boue transportée ou pompée est distribuée (9, 2) dans des lignes de tubes individuelles (S1, S2, ...Sn) de longueur limitée et est appliquée, en répartition temporelle et spatiale, sur le matériau mixte (M) amené à la zone.

2. Procédé selon la revendication 1, dans lequel une réserve commune de boue constante (S0) est conservée au-dessus (z) d'une bande de matière mixte sous haute pression, et à partir de cette réserve, à des endroits chaque fois différents, les coulées de boue sont éjectées par sections sous la pression de la réserve de boue.

3. Procédé selon la revendication 1, dans lequel la réserve de boue (S0) est maintenue prête sous forme cylindrique dans un tube (1) et avec son axe longitudinal (100), en particulier transversalement à une bande du matériau mixte (M), et pivote (α) conjointement avec les points d'éjection (9, 2) des coulées de boue selon un schéma à répétition périodique, autour de son axe longitudinal.

4. Procédé selon la revendication 1, dans lequel la masse de boue est transportée selon un premier volume par unité de temps et la somme des volumes des coulées de boue débitées en répartition temporelle dans la même unité de temps correspond essentiellement au premier volume.

5. Procédé selon la revendication 1, dans lequel la masse de boue est transportée avec une section transversale d'entrée essentiellement en continu (S0), mais est distribuée en plusieurs sections de coulées de boue (S1, S2,...Sn) apparaissant de manière successive dans le temps, qui présentent une section transversale plus petite que la section transversale d'entrée.

6. Procédé selon la revendication 2, dans lequel la pression augmentée est une pression supérieure à la pression ambiante, en particulier supérieure à 1 bar (100 kPa).

7. Procédé selon la revendication 1, dans lequel le matériau mixte (M) plus sec est amené à la zone d'utilisation essentiellement en continu (v, 40).

8. Dispositif de chargement pour le chargement par répartition (distribution) d'une masse de boue pouvant être transportée ou pompée sur un matériau mixte comparativement plus sec, lequel est transportable vers une zone d'utilisation comme une zone d'incinération, **caractérisé par**
(i) un récipient sous pression (1) allongé à ses deux extrémités (11a, 11) avec plusieurs embouts d'échappement (2; 2a, 2b) qui partent de sa périphérie et qui sont agencés à intervalles et qui présentent chacun un organe de fermeture pouvant être commandé (9, 12) ;
(ii) un entraînement (7) pour le mouvement cyclique (α) du récipient sous pression (1);
(iii) un poste articulé (4) pour le raccordement du récipient sous pression (1) à une section de conduite sous pression (10) et pour le transport de la masse de boue au récipient sous pression (1) pendant son mouvement (α).

9. Dispositif de chargement selon la revendication 8, dans lequel un angle sectoriel (α), au moyen duquel le récipient sous pression (1) est orientable, est limité, et le récipient sous pression peut être entraîné en alternance dans les deux directions pour parcourir le secteur dans une direction ou, selon le cas, dans la direction opposée.

10. Dispositif de chargement selon la revendication 8, dans lequel les organes de fermeture (9, 30) sont agencés dans les zones d'extrémité des embouts d'échappement.

11. Dispositif de chargement selon la revendication 10, dans lequel les organes de fermeture sont façonnés comme des vannes d'arrêt pouvant être commandées, toutes les vannes pilotes étant raccordées à un appareil de commande commun (21 ; 20, 13, 21', 21").

12. Dispositif de chargement selon la revendication 8, dans lequel un organe de fermeture (9a, 30) est respectivement agencé dans le conduit d'un tuyau d'échappement (2a, 2k) y afférant.

13. Dispositif de chargement selon la revendication 12, dans lequel chaque organe de fermeture est façonné en vanne d'arrêt pouvant être commandée pneumatiquement (12a), laquelle est raccordée à une source d'air comprimé au moyen de tuyaux flexibles d'air comprimé et de soupapes (13, 20).

14. Dispositif de chargement selon la revendication 13, dans lequel les soupapes (20) et l'entraînement (7) sont reliés à un appareil de commande synchronisé (21).

15. Dispositif de chargement selon la revendication 8, dans lequel les embouts (2a, 2b, 2h) présentent des tronçons de tubes dont le diamètre est plus petit que celui du récipient sous pression (1).

16. Dispositif de chargement selon la revendication 8, dans lequel des tuyaux d'échappement (2) sont agencés à intervalles mutuels (a) le long d'une génératrice du récipient sous.pression (1) et évoluent essentiellement en angle droit par rapport à un axe longitudinal (100) du récipient sous pression.

17. Dispositif de chargement selon la revendication 9, dans lequel le maintien de l'angle sectoriel (α) est contrôlé par des butées mécaniques de délimitation (6).

18. Dispositif de chargement selon la revendication 9, dans lequel l'angle sectoriel (α) est maintenu dans le secteur ou, selon le cas, est contrôlable par des positions limites déterminées électriquement du mouvement de pivotement à récurrence cyclique du récipient sous pression.

19. Dispositif de chargement selon la revendication 8, dans lequel entre le poste articulé (4) et le premier embout (2h) sur le récipient sous pression (1) une section (1a) s'élargissant de manière conique est agencée pour obtenir un volume de réserve plus grand dans le récipient sous pression.

20. Dispositif de chargement selon la revendication 8, dans lequel les intervalles (a) sont essentiellement égaux à deux embouts voisins (2a, 2b, ...2h).

21. Dispositif de chargement selon la revendication 8, dans lequel un embout tubulaire (2z) dans un premier temps fermé est agencé dans une zone d'extrémité du récipient sous pression (1) opposée à la section de la conduite sous pression d'amenée (10), pour être ouvert par adaptation à une plus grande largeur (b) du matériau mixte transporté, être muni d'un organe propre de fermeture pouvant être commandé et être inclus dans la commande des autres organes de fermeture (9).

22. Dispositif de chargement selon la revendication 11 ou 8, dans lequel le ou un appareil de commande synchronisé (21, 21', 21") commande les organes de fermeture pouvant être commandés (9, 12, 30i, 30j), de sorte que lors d'une fermeture d'un premier organe (9a) ou après celle-ci un autre organe (9b) s'ouvre ou est forcé de s'ouvrir.

23. Dispositif de chargement selon la revendication 8, dans lequel, sur le récipient sous pression, un embout auxiliaire (30d) est agencé en face de chaque embout d'échappement (2a, 2b), lequel embout auxiliaire peut être ouvert pour créer, par nettoyage, un passage de l'embout d'échappement et de l'organe de fermeture pouvant être commandé (9, 12).

24. Dispositif de chargement selon la revendication 8, dans lequel l'entraînement (7) est configuré comme un moteur amovible électrique et pouvant être bridé sur un arbre avant du récipient sous pression (1).

25. Dispositif de chargement selon la revendication 24, dans lequel l'entraînement avec son stator est couplé à une bride d'assemblage (11a) non déplacée avec le récipient sous pression (1).

26. Dispositif de chargement selon la revendication 8, dans lequel un dispositif de mesure de la pression (22) est agencé, pour mesurer la pression interne, à proximité du récipient sous pression, en particulier dans la section de conduite sous pression d'amenée (10).

27. Dispositif de chargement selon la revendication 26, dans lequel une protection mécanique contre l'éclatement (23) est agencée à proximité du capteur de pression (22), pour limiter la pression interne à une valeur limite maximale.

28. Dispositif de chargement selon la revendication 8, dans lequel le récipient sous pression (1) présente une configuration tubulaire et cylindrique.
